# EUROPÄISCHE PATENTSCHRIFT

(11) **EP 3 426 021 B1**
(45) Veröffentlichungstag und Bekanntmachung des Hinweises auf die Patenterteilung: **23.12.2020**
(21) Anmeldenummer: 17707468.9
(22) Anmeldetag: 24.02.2017
(51) Int. Cl.: A01K 1/02

(54) **WANDELEMENT FÜR EINEN TIERKÄFIG**
WALL ELEMENT FOR AN ANIMAL CAGE
ÉLÉMENT DE PAROI POUR UNE CAGE D'ANIMAL

(30) Priorität: 11.03.2016 DE 202016001627 U
(43) Veröffentlichungstag der Anmeldung: 16.01.2019
(73) Patentinhaber: Brüggli, 8590 Romanshorn (CH)
(72) Erfinder: STOFFEL, Marco, 8045 Zürich (CH); BACHMANN, Benjamin, 8045 Zürich (CH); LENZI, Arno, 8045 Zürich (CH); SPINELLI, Nico, 8045 Zürich (CH); SOMMER, Remo, 8045 Zürich (CH)
(74) Vertreter: v. Bezold & Partner Patentanwälte - PartG mbB
(86) Internationale Anmeldenummer: PCT/EP2017/000264
(87) Internationale Veröffentlichungsnummer: WO 2017/153037

(56) Entgegenhaltungen:
- EP-A1- 1 661 455
- DE-A1-102014 108 110
- DE-U1-202006 002 167
- DE-U1-202009 015 507
- DE-U1-202014 005 168
- US-A- 4 010 880
- US-A1- 2009 126 638
- US-B1- 6 354 245
- US-B1- 6 460 486

## Beschreibung

Die Erfindung betrifft einen Tierkäfig, insbesondere einen Hundekäfig zur Unterbringung eines Hunds in einem Gepäckraum eines Personenkraftfahrzeugs.

Aus dem Stand der Technik (z. B. DE 40 601 346) sind Hundekäfige bekannte, die zum Transport eines Hunds oder eines sonstigen Haustiers in einem Kofferraum eines Personenkraftfahrzeugs dienen. Problematisch an diesen bekannten Tierkäfigen ist die Verletzungsgefahr bei einem Unfall (Crash).

Zum allgemeinen technischen Hintergrund der Erfindung ist auch hinzuweisen auf DE 20 2009 015507 U1, DE 20 2014 005168 U1, US 6 354 245 B1, US 4 010 880 A, DE 20 2006 002167 U1, EP 1 661 455 A1, US 2009/126638 A1 und DE 10 2014 108110 A1.

Schließlich offenbart US 6 460 486 B1 einen Tierkäfig gemäß dem Oberbegriff von Anspruch 1.

Der Erfindung liegt deshalb die Aufgabe zugrunde, einen Tierkäfig zu verbessern.

Diese Aufgabe wird durch einen Tierkäfig gemäß Anspruch 1 gelöst.

Die Erfindung sieht vorzugsweise vor, dass das Wandelement mindestens einen elastisch komprimierbaren Hohlraum aufweist, um die Crash-Sicherheit des Tierkäfigs zu erhöhen. Diese crash-sichere Gestaltung des Wandelements vermindert die Verletzungsgefahr eines in dem Tierkäfig befindlichen Tiers beim Aufprall auf das crash-sichere Wandelement, da die Hohlräume in dem Wandelement elastisch komprimiert werden, wodurch die Schwere des Aufpralls verringert wird.

In einem bevorzugten Ausführungsbeispiel der Erfindung wird das crash-sichere Wandelement durch Blasformen hergestellt, wodurch auch der elastisch komprimierbare Hohlraum entsteht. Die Erfindung ist jedoch hinsichtlich der Herstellungsweise des Wandelements nicht auf Blasformen beschränkt. Vielmehr kann das Wandelement auch in anderer Weise hergestellt werden.

Bei dem bevorzugten Ausführungsbeispiel der Erfindung ist das Wandelement nach innen gewölbt, um bei einem Aufprall eines in dem Tierkäfig befindlichen Tiers eine größere mechanische Widerstandskraft zu bilden, wie es auch an sich von Staudämmen bereits bekannt ist. Das Wandelement muss hierbei jedoch nicht als Ganzes nach innen gewölbt sein. Es besteht vielmehr auch die Möglichkeit, dass das Wandelement lediglich eine konvex nach innen gewölbte Innenseite aufweist, während die Außenseite des Wandelements wahlweise im Wesentlichen plan, konkav gewölbt oder zumindest weniger stark konvex gewölbt ist als die Innenseite.

Vorzugsweise besteht das Wandelement aus Kunststoff, wie beispielsweise Polyethylen (z. B. PE-HD) oder ABS (ABS: Acrylnitril-Butadien-Styrol). Die Erfindung ist jedoch hinsichtlich des Materials des Wandelements nicht auf Kunststoff beschränkt.

Ferner ist zu erwähnen, dass der elastisch komprimierbare Hohlraum in dem crash-sicheren Wandelement vorzugsweise ein Volumen von mindestens 50 cm³, 100 cm³, 200 cm³ oder mindestens 500 cm³ aufweist. Hierbei besteht auch die Möglichkeit, dass das Wandelement mehrere Hohlräume aufweist, die voneinander getrennt sind und jeweils das vorstehend beschriebene Volumen enthalten.

In dem bevorzugten Ausführungsbeispiel der Erfindung weist das Wandelement mehrere Rippen auf, die jeweils einen Hohlraum bilden. Die einzelnen Rippen sind vorzugsweise äquidistant zueinander angeordnet und verlaufen parallel zueinander und zwar vorzugsweise im Wesentlichen aufrecht.

Bei dem bevorzugten Ausführungsbeispiel der Erfindung weist das Wandelement insgesamt fünf Rippen auf. Die Anzahl der Rippen kann jedoch alternativ auch größer oder kleiner sein. Vorzugsweise liegt die Anzahl der Rippen des Wandelements im Bereich von 2-10, 3-8 oder 4-6.

Gemäß der Erfindung weist der Tierkäfig zumindest an einer Käfigwand vier Strangprofile auf, die vorzugsweise aus Aluminium bestehen und ein Rechteck bilden, wobei das zur Verbesserung der Crash-sicherheit dienende Wandelement rechteckig ist und zwischen die vier Strangprofile eingepasst ist. Das crash-sichere Wandelement wird hierbei also von den vier umgebenden Strangprofilen gehalten.

Hierzu weisen die einzelnen benachbarten Strangprofile jeweils eine Längsnut auf, während das crash-sichere Wandelement mit seinen Seitenkanten jeweils eine Feder bildet, die mit den Längsnuten in den Strangprofilen jeweils eine Nut-Feder-Verbindung bildet.

Es wurde bereits vorstehend erwähnt, dass das crash-sichere Wandelement von Strangprofilen umgeben ist und gehalten wird. Hierbei ist zu unterscheiden zwischen den waagerechten Strangprofilen oberhalb bzw. unterhalb des crash-sicheren Wandelements und den aufrechten Strangprofilen an den gegenüberliegenden Seiten des crash-sicheren Wandelements. Gemäß der Erfindung ist am Ende eines dieser waagerechten Strangprofile ein Metalleinsatz zur Verbindung mit dem angrenzenden aufrechten Strangprofil angeordnet.

Dieser Metalleinsatz weist drei Zinken auf, die im Wesentlichen parallel zueinander nach innen von dem Metalleinsatz abstehen, d. h. in Richtung des crash-sicheren Wandelements. Der mittlere Zinken des Metalleinsatzes ragt dann axial in einen Hohlraum des angrenzenden waagrechten Strangprofils ein. Die beiden äußeren Zinken des Metalleinsatzes greifen dagegen axial in die beiden gegenüberliegenden Längsnuten des waagerechten Strangprofils ein.

Der Metalleinsatz ist auf der den Zinken gegenüberliegenden Seite mit dem angrenzenden aufrechten Strangprofil durch eine Nut-Feder-Verbindung verbunden.

Hierbei ist der Metalleinsatz vorzugsweise von einem Kunststoffmantel umgeben, der einen direkten Berührungskontakt zwischen dem Metalleinsatz und dem waagerechten Strangprofil verhindert. Zum einen kann dadurch ein störendes Klappergeräusch vermieden werden, das bei einem direkten Berührungskontakt zwischen dem Metalleinsatz einerseits und dem aus Aluminium bestehenden Strangprofil andererseits entstehen könnte. Zum anderen wird dadurch aber auch eine Beschädigung der relativ weichen, aus Aluminium bestehenden Strangprofile durch den relativ harten Metalleinsatz verhindert.

Der erfindungsgemäße Tierkäfig weist in Übereinstimmung mit dem Stand der Technik vorzugsweise an einer Seite eine Käfigtür auf. Das zur Verbesserung der Crash-Sicherheit dienende Wandelement ist dann vorzugsweise gegenüber der Käfigtür angeordnet.

Zu dem Tierkäfig ist weiterhin zu erwähnen, dass er vorzugsweise die technischen Normen ECE R17, ECE R126 und/oder DIN75410 zur Crash-Sicherheit bzw. zur Ladungssicherung erfüllt.

Andere vorteilhafte Weiterbildungen der Erfindung sind in den Unteransprüchen gekennzeichnet oder werden nachstehend zusammen mit der Beschreibung des bevorzugten Ausführungsbeispiels anhand der Figuren näher erläutert. Es zeigen:

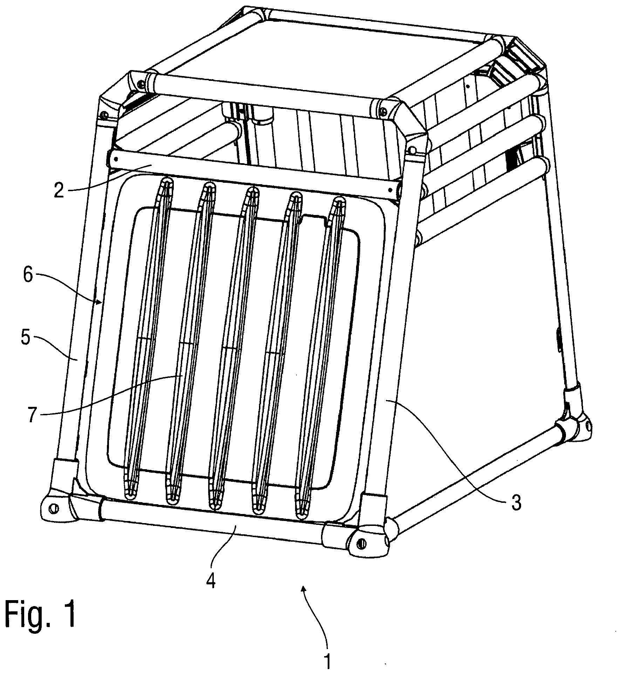

- Figur 1: eine Perspektivansicht eines erfindungsgemäßen Hundekäfigs mit einem crash-sicheren Wandelement,
- Figur 2: eine Querschnittsansicht des crash-sicheren Wandelements,

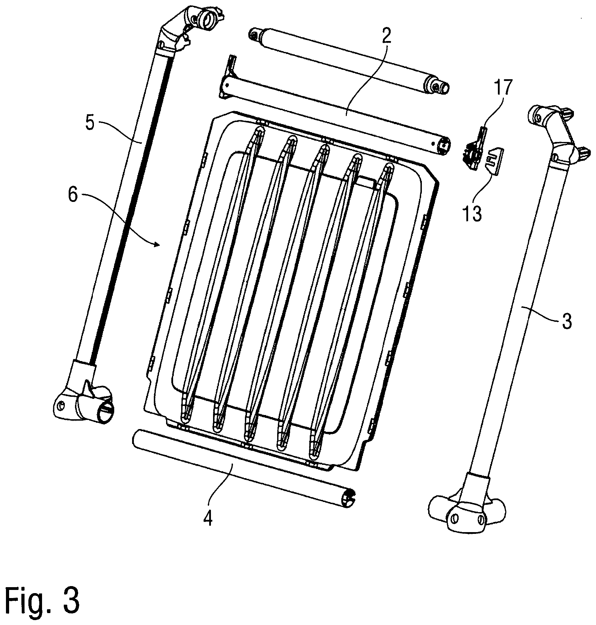

- Figur 3: eine Explosionsdarstellung des crash-sicheren Wandelements mit den umgebenden Strangprofilen,

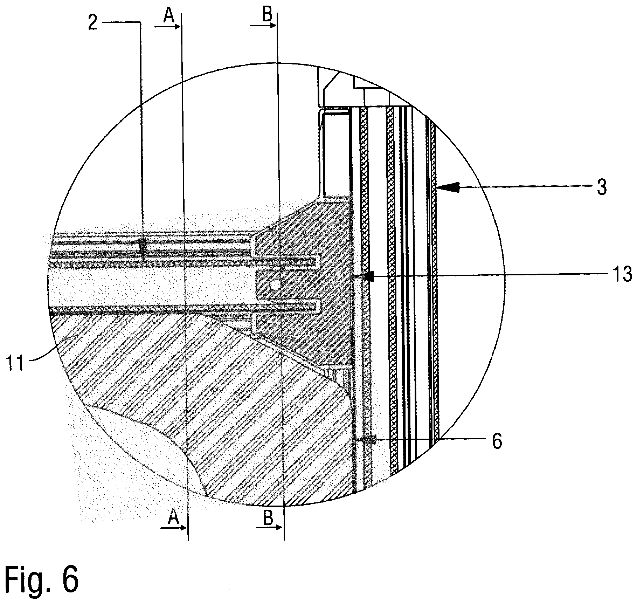

- Figur 4: eine Schnittansicht entlang der Schnittlinie A-A in Figur 6,
- Figur 5: eine Schnittansicht entlang der Schnittlinie B-B in Figur 6,
- Figur 6: eine Detaildarstellung im Verbindungsbereich eines waagerechten Strangprofils mit einem aufrechten Strangprofil,

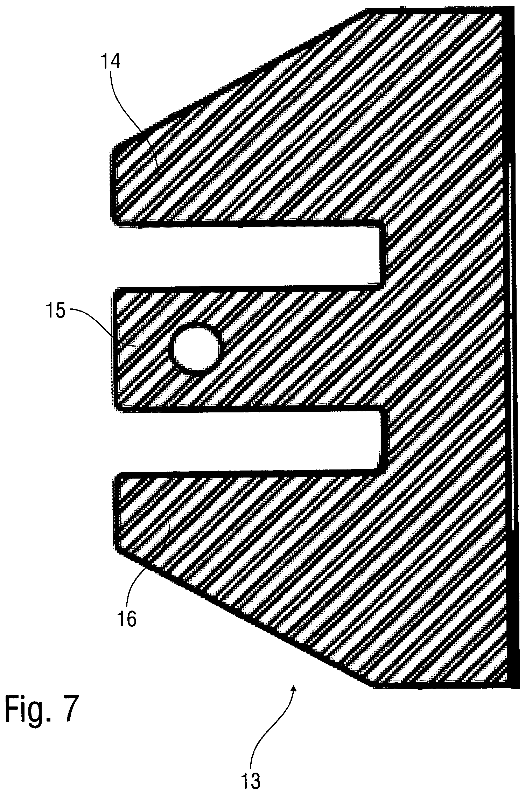

- Figur 7: einen Metalleinsatz zur Verbindung der aufrechten Strangprofile mit den waagerechten Strangprofilen,
- Figur 8: eine Perspektivansicht des Metalleinsatzes aus Figur 7 mit einem Kunststoffmantel,
- Figur 9: eine Querschnittsansicht eines Strangprofils,
- Figur 10: eine Abwandlung von Figur 4, sowie
- Figur 11: eine Abwandlung von Figur 5.

Die Zeichnungen zeigen verschiedene Ansichten eines erfindungsgemäßen Tierkäfigs 1, der weitgehend herkömmlich ausgebildet ist, wie es beispielsweise aus DE 40 601 346 bekannt ist.

Der Tierkäfig 1 besteht im Wesentlichen aus mehreren Strangprofilen 2, 3, 4, 5 aus Aluminium, wobei die Strangprofile 3, 5 im Wesentlichen aufrecht und leicht zur Vertikalen geneigt angeordnet sind, während die Strangprofile 2, 4 waagerecht angeordnet sind. Die Strangprofile 2-5 bilden hierbei ein Rechteck, wobei zwischen die Strangprofile 2-5 ein crashsicheres Wandelement 6 eingepasst ist.

Das crash-sichere Wandelement 6 besteht in diesem Ausführungsbeispiel aus Polyethylen (PE-HD) und wird durch Blasformen hergestellt. Hierbei ist zu erwähnen, dass das crash-sichere Wandelement 6 fünf Rippen 7 aufweist, die in dem crash-sicheren Wandelement 6 jeweils aufrecht verlaufen und jeweils einen Hohlraum 8 einschließen. Die einzelnen Rippen 7 sind also aufgrund der darin befindlichen Hohlräume 8 bei einem Aufprall elastisch verformbar, wodurch die Schwere eines Aufpralls und dadurch das Verletzungsrisiko verringert wird.

Hierbei ist zu erwähnen, dass die einzelnen Rippen 7 jeweils eine Wandstärke d1 bzw. d2 aufweisen, die hinreichend gering ist, um die elastische Verformbarkeit zu ermöglichen.

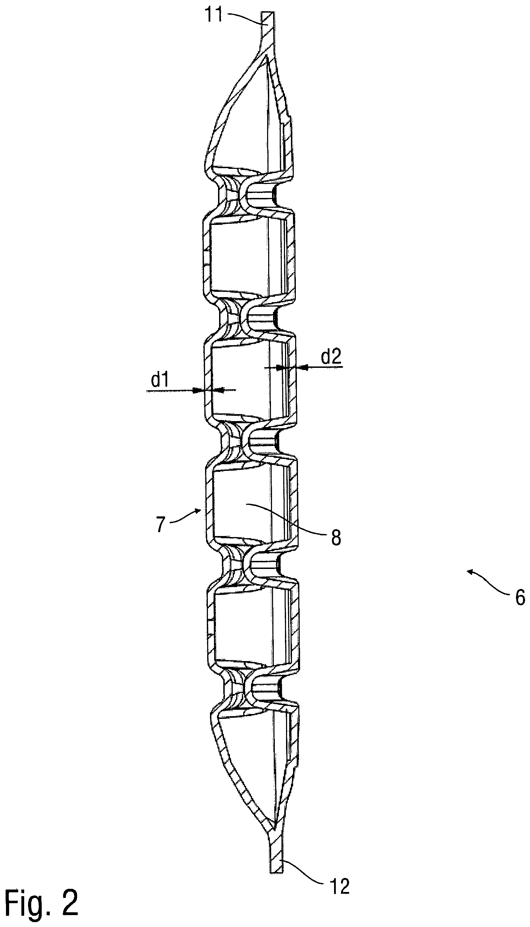

Weiterhin ist zu erwähnen, dass das crash-sichere Wandelement 6 eine leicht konvex nach innen gewölbte Innenseite aufweist, die in Figur 2 links dargestellt ist. Die Außenseite des crash-sicheren Wandelements 6 ist dagegen im Wesentlichen eben, wie aus Figur 2 auf der rechten Seite ersichtlich ist. Diese Wölbung des crash-sicheren Wandelements 6 nach innen erhöht die Widerstandskraft gegenüber einem Aufprall von innen, wie es an sich von Staudämmen bereits bekannt ist.

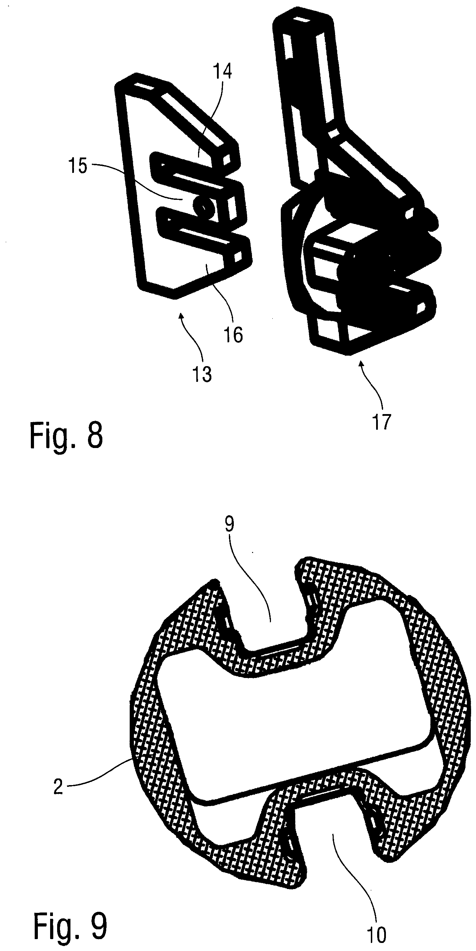

Es wurde bereits vorstehend erwähnt, dass das crash-sichere Wandelement 6 zwischen die Strangprofile 2-5 eingepasst ist, wobei das Wandelement 6 von den umgebenen Strangprofilen 2-5 gehalten wird. Hierzu weisen die Strangprofile 2-5 Längsnuten 9, 10 (vgl. Fig. 9) auf. Das crash-sichere Wandelement 6 bildet dann mit seinen Seitenkanten 11, 12 jeweils eine Nut-Feder-Verbindung mit den Längsnuten 9, 10 in den Strangprofilen 2-5.

Weiterhin sieht die Erfindung eine besondere mechanische Verbindung vor zwischen den aufrechten Strangprofilen 3, 5 einerseits und dem waagerechten Strangprofil 2. Hierzu ist jeweils ein Metalleinsatz 13 vorgesehen, der drei parallele Zinken 14, 15, 16 aufweist. Der obere Zinken 14 des Metalleinsatzes 13 ragt dann axial in die obere Längsnut 9 des Strangprofils hinein. Der untere Zinken 16 des Metalleinsatzes 13 ragt dagegen in die untere Längsnut 10 des Strangprofils 2 hinein. Der mittlere Zinken 15 des Metalleinsatzes 13 ragt dagegen in axialer Richtung in einen Hohlraum in dem Strangprofil 2 hinein.

Der Metalleinsatz 13 ist hierbei von einem Kunststoffmantel 17 umgeben, der einen direkten Berührungskontakt zwischen dem Metalleinsatz 13 einerseits und dem Strangprofil 2 verhindert. Zum einen werden dadurch Klappergeräusche zwischen dem Aluminium des Strangprofils 2 und dem Metall des Metalleinsatzes 13 verhindert. Zum anderen wird dadurch aber auch verhindert, dass das relativ harte Metall des Metalleinsatzes 13 das relativ weiche Aluminium des Strangprofils 2 zerkratzt.

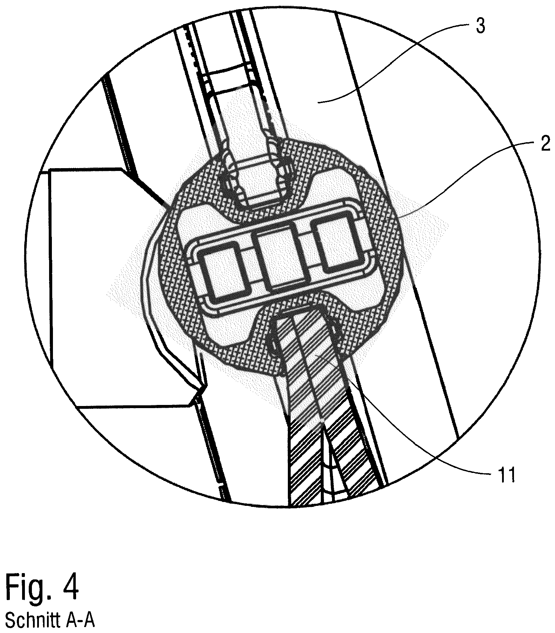

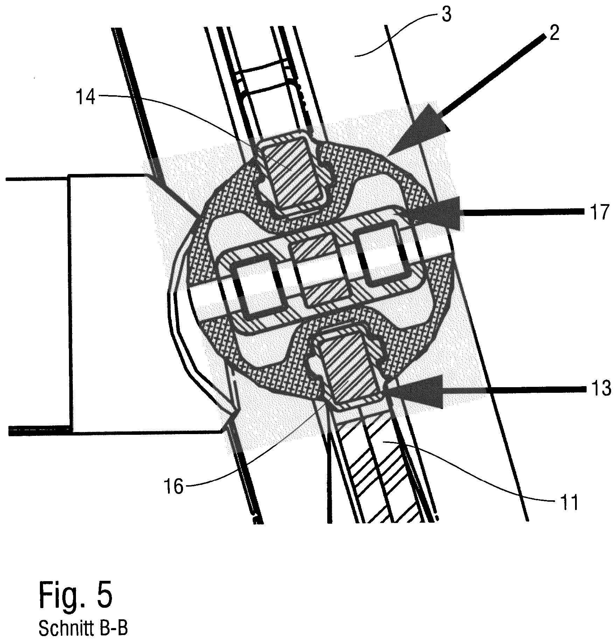

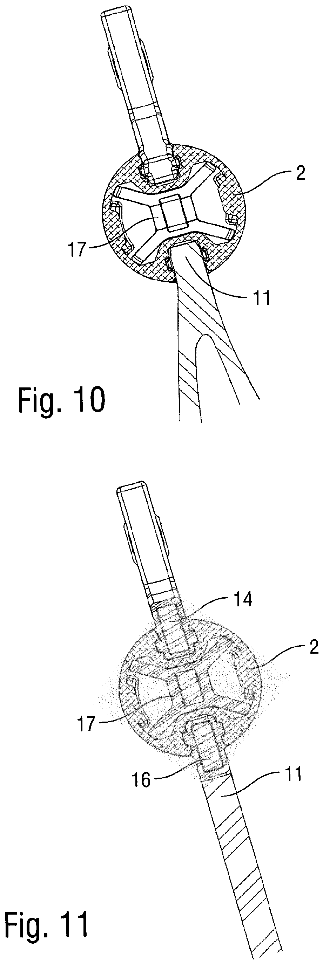

Die Figuren 10 und 11 zeigen eine Abwandlung der Figuren 4 bzw. 5, so dass zur Vermeidung von Wiederholungen auf die vorstehende Beschreibung verwiesen wird, wobei für entsprechende Einzelheiten dieselben Bezugszeichen verwendet werden.

### Bezugszeichenliste:

- 1: Tierkäfig
- 2-5: Strangprofile
- 6: Wandelement zur Verbesserung der Crash-Sicherheit
- 7: Rippen des Wandelements
- 8: Hohlraum in den Rippen
- 9, 10: Längsnuten in den Strangprofilen
- 11, 12: Seitenkanten des Wandelements
- 13: Metalleinsatz
- 14-16: Zinken des Metalleinsatzes
- 17: Kunststoffmantel um Metalleinsatz
- d1, d2: Wandstärke der hohlen Rippen

## Patentansprüche

1. Tierkäfig (1) mit
a) vier Strangprofilen (2-5) an einer Käfigwand, wobei
a1) die Strangprofile (2-5) ein Rechteck bilden, und
a2) die Strangprofile (2-5) jeweils eine Längsnut aufweisen,
b) einem rechteckigen Wandelement (6) zur Verbesserung der Crash-Sicherheit, wobei
b1) das Wandelement (6) zwischen die vier Strangprofile (2-5) eingepasst ist, und
b2) das Wandelement (6) mit seinen Seitenkanten (11, 12) jeweils eine Feder bildet, die mit den Längsnuten in den Strangprofilen (2-5) jeweils eine Nut-Feder-Verbindung bildet,
**dadurch gekennzeichnet,**
c) **dass** am Ende eines waagerechten Strangprofils (2) ein Metalleinsatz (13) zur Verbindung mit einem aufrechten Strangprofil angeordnet ist wobei dieses waagerechte Strangprofil (2)zwei gegenüberliegende Längsnuten (9, 10) aufweist,
d) **dass** der Metalleinsatz (13) drei Zinken (14-16) aufweist, die im Wesentlichen parallel zueinander von dem Metalleinsatz (13) abstehen,
e) **dass** der mittlere Zinken (15) des Metalleinsatzes (13) axial in einen Hohlraum des waagerechten Strangprofils eingreift,
f) **dass** die beiden äußeren Zinken (14, 16) des Metalleinsatzes (13) axial in die beiden gegenüber liegenden Längsnuten (9, 10) des waagerechten Strangprofils (2) eingreifen, und
g) **dass** der Metalleinsatz (13) mit dem angrenzenden aufrechten Strangprofil (3, 4) durch eine Nut-Feder-Verbindung verbunden ist.

2. Tierkäfig (1) nach Anspruch 1,
**dadurch gekennzeichnet,**
a) **dass** das Wandelement (6) zur Verbesserung der Crash-Sicherheit dient und durch Blasformen hergestellt ist, und/oder
b) **dass** das Wandelement (6) zur Verbesserung der Crash-Sicherheit dient und mindestens einen elastisch komprimierbaren Hohlraum (8) aufweist, um die Crash-Sicherheit des Tierkäfigs (1) zu erhöhen

3. Tierkäfig (1) nach Anspruch 2, **gekennzeichnet durch**
a) eine konvex gewölbte Innenseite des Wandelements (6), die im montierten Zustand dem Innenraum des Tierkäfigs (1) zugewandt ist, und
b) eine Außenseite des Wandelements (6), die im montierten Zustand dem Innenraum des Tierkäfigs (1) abgewandt ist, wobei die Außenseite im Wesentlichen plan oder konkav gewölbt oder zumindest weniger stark konvex gewölbt ist als die Innenseite.

4. Tierkäfig (1) nach einem der Ansprüche 2 bis 3, **dadurch gekennzeichnet, dass** das Wandelement (6) aus Kunststoff besteht, insbesondere aus Polyethylen, insbesondere aus PE-HD, oder aus ABS

5. Tierkäfig (1) nach einem der Ansprüche 2 bis 4, **dadurch gekennzeichnet, dass** der Hohlraum (8) jeweils ein Volumen von mindestens 50 cm³, 100 cm³, 200 cm³ oder mindestens 500 cm³ aufweist.

6. Tierkäfig (1) nach einem der Ansprüche 2 bis 5, **dadurch gekennzeichnet, dass** das Wandelement (6) mehrere Rippen (7) aufweist, die jeweils einen Hohlraum (8) bilden.

7. Tierkäfig (1) nach Anspruch 6,
**dadurch gekennzeichnet,**
a) **dass** die Rippen (7) parallel zueinander verlaufen, und/oder
b) **dass** die Rippen (7) im Wesentlichen äquidistant angeordnet sind,
c) **dass** die Rippen (7) im montierten Zustand im Wesentlichen aufrecht verlaufen, und/oder
d) **dass** die Anzahl der Rippen (7) größer als 2, 3 oder 4 ist, und/oder
e) **dass** die Anzahl der Rippen (7) kleiner als 10, 8, 7 oder 6 ist.

8. Tierkäfig (1) nach einem der vorhergehenden Ansprüche,
**dadurch gekennzeichnet, dass** der Metalleinsatz (13) mindestens teilweise von einem Kunststoffmantel (17) umgeben ist, der einen direkten Berührungskontakt zwischen dem Metalleinsatz (13) und dem waagerechten Strangprofil (2) verhindert.

9. Tierkäfig (1) nach einem der Ansprüche 2 bis 8,
**dadurch gekennzeichnet,**
a) **dass** der Tierkäfig (1) an einer Seite eine Käfigtür aufweist, und
b) **dass** das zur Verbesserung der Crash-Sicherheit dienende Wandelement (6) gegenüber der Käfigtür angeordnet ist.

10. Tierkäfig (1) nach einem der vorhergehenden Ansprüche,
**dadurch gekennzeichnet, dass** die Strangprofile (2-5) aus Aluminium oder einer Aluminium-Legierung bestehen.

11. Tierkäfig (1) nach einem der vorhergehenden Ansprüche,
**dadurch gekennzeichnet, dass** der Tierkäfig (1) den technischen Normen ECE R17, ECE R126 und/oder DIN75410 zur Crashsicherheit bzw. zur Ladungssicherung entspricht.

12. Tierkäfig (1) nach einem der Ansprüche 2 bis 11,
**dadurch gekennzeichnet, dass** das zur Verbesserung der Crash-Sicherheit dienende Wandelement (6) nach innen gewölbt ist.

## Claims

1. Animal cage (1) with
a) four extruded profiles (2-5) on a cage wall, wherein
a1) the extruded profiles (2-5) form a rectangle, and
a2) the extruded profiles (2-5) each have a longitudinal groove,
b) a rectangular wall (6) for the improvement of crash safety, wherein
b1) the wall element (6) is fitted between the four extruded profiles (2-5), and
b2) the wall element (6) with each of its side edges (11, 12) forms a tongue which forms a tongue-and-groove connection with the longitudinal grooves in the extruded profiles (2-5),
**characterized in**
c) **that** a metal insert (13) is arranged at the end of a horizontal extruded profile (2) for connection to an upright extruded profile, wherein this upright extruded profile (2) comprises two opposing longitudinal grooves (9, 10),
d) **that** the metal insert (13) has three tines (14-16) which project substantially parallel to one another from the metal insert (13),
e) **that** the central tine (15) of the metal insert (13) engages axially in a cavity of the horizontal extruded profile,
f) **that** the two outer tines (14, 16) of the metal insert (13) engage axially in the two opposite longitudinal grooves (9, 10) of the horizontal extruded profile (2), and
g) the metal insert (13) is connected to the adjacent upright extruded profile (3, 4) by a tongue-and-groove connection.

2. Animal cage (1) according to claim 1, **characterized in**
a) **that** the wall element (6) serves for the improvement of crash safety and is manufactured by blow molding, and/or
b) **that** the wall element (6) serves for the improvement crash safety and comprises at least one elastically compressible cavity (8) in order to increase the crash safety of the animal cage (1).

3. Animal cage (1) according to claim 2, **characterized by**
a) a convexly curved inner surface of the wall element (6) facing the interior of the animal cage (1) when assembled; and
b) an exterior surface of the wall element (6) facing away from the interior of the animal cage (1) when assembled, the exterior surface being substantially flat or concave or at least less convex than the interior.

4. Animal cage (1) according to any of claims 2 to 3,
**characterized in that** the wall element (6) consists of plastic, in particular of polyethylene, in particular of PE-HD, or of ABS

5. Animal cage (1) according to any of claims 2 to 4,
**characterized in that** the cavity (8) has a volume of at least 50 cm³, 100 cm³, 200 cm³ or at least 500 cm³ respectively.

6. Animal cage (1) according to any of claims 2 to 5,
**characterized in that** the wall element (6) has several ribs (7) which each form a cavity (8).

7. Animal cage (1) according to claim 6,
**characterized in**
a) **that** the ribs (7) run parallel to each other, and/or
b) **that** the ribs (7) are arranged substantially equidistantly,
c) **that** the ribs (7) run upright in the assembled state, and/or
d) **that** the number of ribs (7) is greater than 2, 3 or 4, and/or
e) **that** the number of ribs (7) is less than 10, 8, 7 or 6.

8. Animal cage (1) according to any of the preceding claims, **characterized in that** the metal insert (13) is at least partially surrounded by a plastic sheath (17) which prevents direct contact between the metal insert (13) and the horizontal extruded profile (2).

9. Animal cage (1) according to any one of claims 2 to 8,
**characterised in**
a) **that** the animal cage (1) has a cage door on one side, and
b) **that** the wall element (6) serving to improve crash safety is arranged opposite the cage door.

10. Animal cage (1) according to any of the preceding claims, **characterised in that** the extruded profiles (2-5) are made of aluminium or an aluminium alloy.

11. Animal cage (1) in accordance with one of the preceding claims, **characterized in that** the animal cage (1) complies with the technical standards ECE R17, ECE R126 and/or DIN75410 for crash safety and/or load securing.

12. Animal cage (1) according to one of claims 2 to 11,
**characterized in that** the wall element (6) serving to improve crash safety is curved inwards.

## Revendications

1. Cage d'animal (1) avec
a) quatre profils extrudés (2 - 5) sur une paroi de cage, dans laquelle
a1) les profils extrudés (2 - 5) forment un rectangle, et
a2) les profils extrudés (2 - 5) présentent respectivement une rainure longitudinale,
b) un élément de paroi (6) rectangulaire pour améliorer la sécurité en cas de collision, dans laquelle
b1) l'élément de paroi (6) est ajusté entre les quatre profils extrudés (2 - 5), et
b2) l'élément de paroi (6) forme avec ses arêtes latérales (11, 12) respectivement une languette, qui forme avec les rainures longitudinales dans les profils extrudés (2 - 5) respectivement une liaison rainurelanguette,
**caractérisée en ce**
c) **qu'**un insert métallique (13) destiné à être relié à un profil extrudé vertical est disposé sur l'extrémité d'un profil extrudé horizontal (2), dans laquelle ledit profil extrudé horizontal (2) présente deux rainures longitudinales (9, 10) se faisant face,
d) **que** l'insert métallique (13) présente trois dents (14 - 16), qui dépassent de l'insert métallique (13) sensiblement de manière parallèle les unes par rapport aux autres,
e) **que** la dent centrale (15) de l'insert métallique (13) vient en prise de manière axiale avec une cavité du profil extrudé horizontal,
f) **que** les deux dents extérieures (14, 16) de l'insert métallique (13) viennent en prise de manière axiale avec les deux rainures longitudinales (9, 10) se faisant face du profil extrudé horizontal (2), et
g) **que** l'insert métallique (13) est relié au profil extrudé vertical (3, 4) adjacent par une liaison rainurelanguette.

2. Cage d'animal (1) selon la revendication 1,
**caractérisée en ce**
a) **que** l'élément de paroi (6) sert à améliorer la sécurité en cas de collision et est fabriqué par moulage par soufflage, et/ou
b) **que** l'élément de paroi (6) sert à améliorer la sécurité en cas de collision et présente au moins une cavité (8) compressible de manière élastique pour augmenter la sécurité en cas de collision de la cage d'animal (1).

3. Cage d'animal (1) selon la revendication 2,
**caractérisée par**
a) un côté intérieur bombé de manière convexe de l'élément de paroi (6), qui est tourné dans l'état monté vers l'espace intérieur de la cage d'animal (1), et
b) un côté extérieur de l'élément de paroi (6), qui est opposé dans l'état monté à l'espace intérieur de la cage d'animal (1), dans laquelle le côté extérieur est bombé sensiblement de manière plane ou de manière convexe ou est bombé au moins de manière moins fortement convexe que le côté intérieur.

4. Cage d'animal (1) selon l'une quelconque des revendications 2 à 3, **caractérisée en ce que** l'élément de paroi (6) est constitué de matière plastique, en particulier de polyéthylène, en particulier de PE-HD ou d'ABS.

5. Cage d'animal (1) selon l'une quelconque des revendications 2 à 4, **caractérisée en ce que** la cavité (8) présente respectivement un volume d'au moins 50 cm³, 100 cm³, 200 cm³ ou d'au moins 500 cm³.

6. Cage d'animal (1) selon l'une quelconque des revendications 2 à 5, **caractérisée en ce que** l'élément de paroi (6) présente plusieurs nervures (7), qui forment respectivement une cavité (8).

7. Cage d'animal (1) selon la revendication 6,
**caractérisée en ce**
a) **que** les nervures (7) s'étendent de manière parallèle les unes par rapport aux autres, et/ou
b) **que** les nervures (7) sont disposées de manière sensiblement équidistante,
c) **que** les nervures (7) s'étendent dans l'état monté de manière sensiblement verticale, et/ou
d) **que** le nombre des nervures (7) est supérieur à 2, 3 ou 4, et/ou
e) **que** le nombre des nervures (7) est inférieur à 10, 8, 7 ou 6.

8. Cage d'animal (1) selon l'une quelconque des revendications précédentes, **caractérisée en ce que** l'insert métallique (13) est entouré au moins en partie d'une gaine en matière plastique (17), qui empêche un contact physique direct entre l'insert métallique (13) et le profil extrudé horizontal (2).

9. Cage d'animal (1) selon l'une quelconque des revendications 2 à 8,
**caractérisée en ce**
a) **que** la cage d'animal (1) présente sur un côté une porte de cage, et
b) **que** l'élément de paroi (6) servant à améliorer la sécurité en cas de collision est disposé en vis-à-vis de la porte de cage.

10. Cage d'animal (1) selon l'une quelconque des revendications précédentes,
**caractérisée en ce que** les profils extrudés (2 - 5) sont constitués d'aluminium ou d'un alliage d'aluminium.

11. Cage d'animal (1) selon l'une quelconque des revendications précédentes, **caractérisée en ce que** la cage d'animal (1) répond aux normes techniques ECE R17, ECE R126 et/ou DIN75410 en matière de sécurité en cas de collision et/ou de blocage de charge.

12. Cage d'animal (1) selon l'une quelconque des revendications 2 à 11,
**caractérisée en ce que** l'élément de paroi (6) servant à améliorer la sécurité en cas de collision est bombé vers l'intérieur.
